# EUROPÄISCHE PATENTSCHRIFT

(11) **EP 2 106 515 B1**
(45) Veröffentlichungstag und Bekanntmachung des Hinweises auf die Patenterteilung: **02.04.2014**
(21) Anmeldenummer: 07822299.9
(22) Anmeldetag: 07.11.2007
(51) Int. Cl.: F16L 41/08, F16L 3/13

(54) **VERBINDUNGSANORDNUNG FÜR FLUIDLEITUNGEN**
CONNECTOR ARRANGEMENT FOR FLUID LINES
ENSEMBLE RACCORDEMENT DE CONDUITS DE FLUIDE

(30) Priorität: 22.12.2006 DE 102006061112
(43) Veröffentlichungstag der Anmeldung: 07.10.2009
(73) Patentinhaber: ContiTech Kühner GmbH & Cie. KG, 71570 Oppenweiler (DE)
(72) Erfinder: MARSCHALL, Peter, 71579 Spiegelberg-Jux (DE); RÖCK, Claus, 71560 Sulzbach-Murr (DE)
(74) Vertreter: Finger, Karsten
(86) Internationale Anmeldenummer: PCT/EP2007/061985
(87) Internationale Veröffentlichungsnummer: WO 2008/077677

(56) Entgegenhaltungen:
- EP-A- 0 969 188
- GB-A- 1 403 714
- GB-A- 2 108 617
- US-A- 3 521 332
- US-A1- 2005 029 806

## Beschreibung

Die Erfindung betrifft eine Verbindungsanordnung für Fluidleitungen mit einer weiteren fluidfördernden Komponente, bei der die Fluidleitung mindestens einen radial nach außen weisenden Bund aufweist, der mittels einer Halterung axial gegen die weiteren fluidfördernde Komponente verspannbar ist, wobei die Halterung der Verbindungsanordnung mindestens eine U-förmige seitliche Aufnahme und mindestens eine seitlich zu der Aufnahme versetzte Verschraubungsbohrung aufweist und die mindestens eine U-förmige Aufnahme durch zwei Schenkel gebildet ist, die seitlich von der Verschraubungsbohrung sich in einer vorbestimmten Länge von der Halterung weg erstrecken, wobei die vorbestimmte Länge der Schenkel so bemessen ist, dass sie bei plastischer Verformung die Fluidleitung mindestens mehr als zur Hälfte umschließen.

Derartige Verbindungsanordnungen sind seit längerem in vielfältigen Ausführungsformen im Einsatz.

Die DE 692 15 779 T2 zeigt eine typische derartige Verbindungsanordnung, bei der die Halterung als eine eine Rohrleitung vollständig umschließende Halteplatte ausgebildet ist, die mittels einer seitlich angeordneten Verschraubung auf einen Bund einer Rohrleitung drückt und damit die Rohrleitung in einer Bohrung der weiteren fluidführenden Komponente festhält.

Eine derartige Halteplatte ist jedoch nur bei Rohrleitungen einsetzbar, die entweder nur an einem Ende einen Bund aufweisen oder ein zweiter Bund erst nach Aufstecken der Halteplatte auf die Fluidleitung an der Fluidleitung erzeugt wird.

Die DE 813 297 U 1 zeigt eine Flanschverbindung, bei der die Haltevorrichtung aus zwei Flanschhälften besteht, die um eine Rohrleitung mit Bund herumlegbar sind und dann auf einer weiteren fluidführenden Komponente verschraubbar sind. Durch diese Anordnung kann die Flanschverschraubung auch an Rohren mit zwei Bunden eingesetzt werden. Dabei sind jedoch zur sicheren Halterung des Rohres mehrere Verschraubungen notwendig.

Die DE 102 41 921 B3 zeigt eine Anschlusseinrichtung, bei der eine Fluidleitung mit bcispielsweise angelötetem Dichtflansch durch einen gabelförmigen Haltehebel und eine Verschraubung axial in einer weiteren fluidführenden Komponente eingepresst ist.

Bei allen diesen Anordnungen muss jedoch die Fluidleitung so lange separat in ihrer Position gehalten werden, bis der Haltehebel bzw. die Flanschen in Position liegen. Anderenfalls würde die Fluidleitung aus ihrer Position herausfallen. Bei der Montage sind also mehrere separate Teile zu handhaben.

In der US 2005/029806 A1 ist eine Verbindungsanordnung für Fluidleitungen offenbart, bei der in einer Ausführungsform eine Umformung des Halters vorgesehen ist. Der Halter weist pro Rohrbefestigung jeweils zwei Schenkel auf, deren Umformung ohne Rücksicht auf den Materialfluss der Schenkel erfolgt. Diese werden radial um das Rohr herum gcformt. Die Schenkel sind von der eigentlichen Dichtstelle derart beabstandet, dass sie axial keinen Kontakt mit den dichtenden Bestandteilen der Rohrverbindung haben.

Es hat sich herausgestellt, dass bei der plastischen Verformung der meist einen rechteckigen oder quadratischen Querschnitt aufweisenden Schenkel im ins Innere der U-Form weisenden Teilbereich der Schenkel durch die in diesem Bereich bei der Umformung auftretenden tangentialen Materialstauchungen eine axiale Verdickung des Querschnitts auftritt. Die bei der Umformung in dieser Ausführungsform der US 2005/029806 A1 daher auftretende axiale Verdickung der Schenkel ist hier aufgrund der axialen Beabstandung von der Dichtstelle nicht störend und wird in Kauf genommen. Nachteilig ist hierbei, dass durch die axiale Verdickung bei direktem Kontakt des Halters mit den dichtenden Teilen der Verbindung, d.h. ohne axiale Beabstandung, eine Dichtheit nicht zuverlässig erreichbar ist.

Der Erfindung liegt die Aufgabe zugrunde, eine Verbindungsanordnung der eingangs geschilderten Art zu schaffen, die eine sichere, druckdichte Verbindung der Fluidleitung mit der weiteren fluidführenden Komponente bei einfacher Montage auch an Fluidleitungen mit zwei Bunden ermöglicht.

Diese Aufgabe wird dadurch gelöst, dass die U-förmigen Aufnahme mindestens einen Entlastungsbereich aufweist, in dem Lücken, Nuten, Hohlräume oder andere Materialreduktionen angeordnet sind.

In den erfindungsgemäßen Entlastungsbereichen kann bei der Stauchung der der Fluidleitung zugeordneten Bereiche das Material in den Lücken, Nuten, Hohlräumen oder anderen Materialreduktionen zusammenfließen. Dadurch wird im Wesentlichen verhindert, dass eine Verdickung des Querschnittes an den Schenkeln auftritt. Die zwischen den Entlastungsbereichen noch auftretenden örtlichen Verdickungen sind meist derart gering ausgeprägt, dass die dauerhaft sichere Funktion der Verbindung nicht gefährdet ist.

Anhand der Zeichnung wird nachstehend ein Beispiel der Erfindung näher erläutert.
Es zeigt
- Fig. 1: eine erfindungsgemäße Verbindungsanordnung mit Halterung vor der Montage in einer Draufsicht von unten,
- Fig. 2: die erfindungsgemäße Verbindungsanordnung im montierten Zustand in einer Draufsicht von unten und
- Fig. 3: die erfindungsgemäße Verbindungsanordnung in montiertem Zustand in einem Teillängsschnitt.

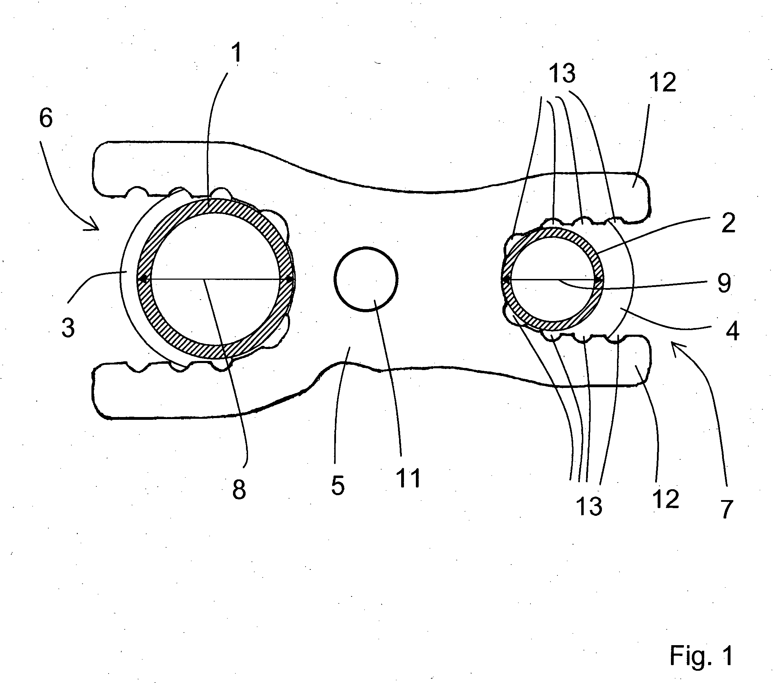

Die in der Fig. 1 gezeigte Verbindungsanordnung weist zwei Fluidleitungen 1 und 2 mit je einem angestauchten, radial nach außen weisenden Bund 3 und 4 auf. Eine Halterung 5 ist in Form einer Doppelgabel ausgebildet, wobei zwei seitliche gegenüberliegende U-förmige Aufnahmen 6 und 7 auf die Fluidleitungen 1 und 2 aufgeschoben sind. Die Aufnahmen der Aufnahmen 6 und 7 sind den Außendurchmessern der Rohre so angepasst, dass die Rohre 6 und 7 ohne nennenswertes Spiel, nicht jedoch die Bunde 3 und 4 in die Aufnahmen 6 und 7 hineinpassen. Die Halterung 5 weist außerdem eine Bohrung 11 zur Verschraubung der Halterung 5 auf.

Da die Aufnahmen 6 und 7 prinzipiell gleichwirkend sind, wird im Folgenden nur noch eine Aufnahme, nämlich Aufnahme 7 weiter beschrieben.

Die Aufnahme 7 weist zwei Arme 12 auf, die Entlastungsbereiche in Form von auf ihrer der Fluidleitung 2 zugeordneten Außenwand parallel zur Hauptachse der Fluidleitung 2 verlaufenden Nuten 13 aufweist, wobei die Nuten 13 von der Fluidleitung 2 weg ins Innere der Arme 12 ausgedehnt sind, wobei Breite und Tiefe der Nuten 13 einem vorbestimmten, vom Durchmesser 9 der Fluidleitung 2 abhängigen Maß entsprechen.

Die Halterung 5 ist entlang der Hauptachse der Fluidleitung 2 axial so angeordnet ist, dass sie auf dem Bund 4 aufliegt.

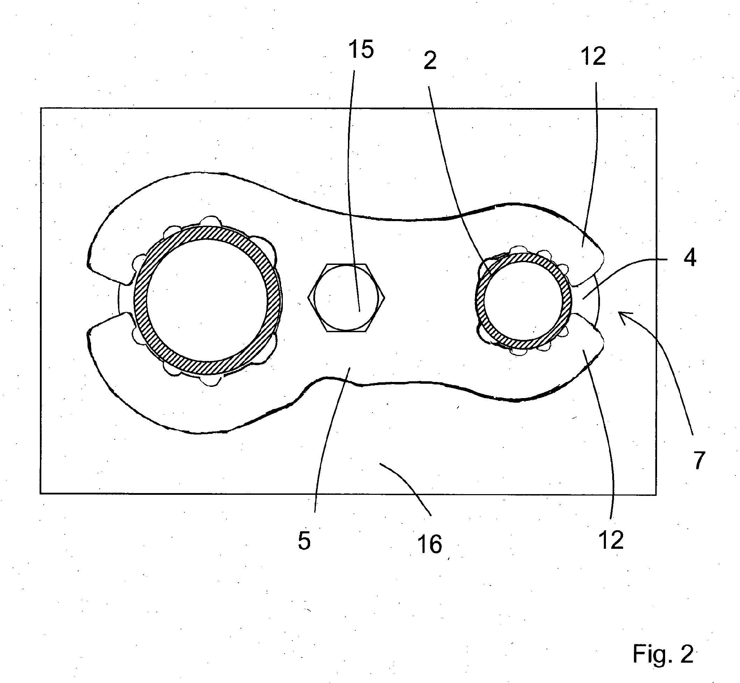

In Fig. 2 ist die Verbindungsanordnung in montiertem Zustand gezeigt. Die Halterung 5 ist mit einer Schraube 15 durch die nun nicht mehr sichtbare Bohrung 11 auf einem Kupplungsblock 16 fixiert. Die Arme 12 der Aufnahme 7 sind plastisch so verformt, dass sie die Fluidleitung 2 fast vollständig umschließen, so dass die Fluidleitung 2 mit der Halterung 5 fest und unlösbar verbunden ist.

Durch die Umschließung der Fluidleitung 2 durch die Arme 12 vergrößert sich die Auflagefläche der Arme 12 auf den Bund 4. Durch die Fixierung der Halterung 5 mit der Schraube 15 wird über die Arme 12 und den Bund 4 die Fluidleitung 2 in den Kupplungsblock 16 eingepresst.

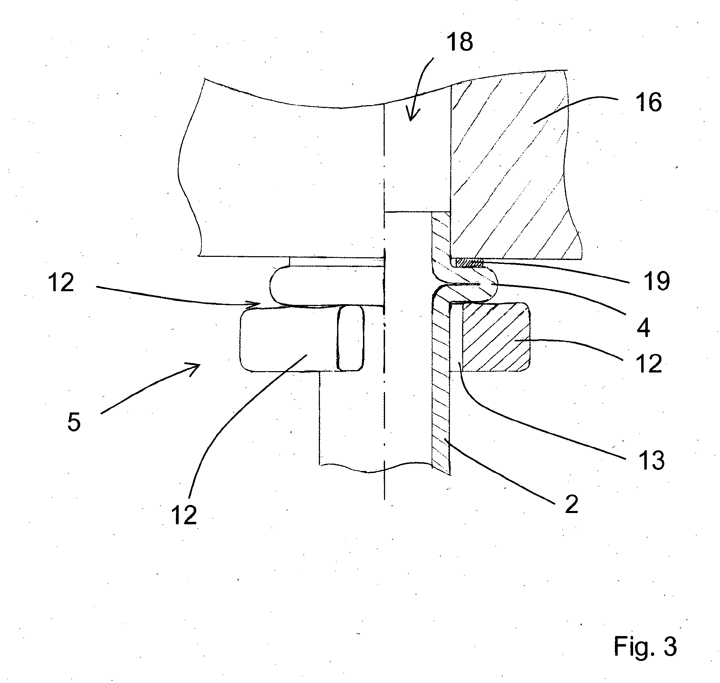

In Fig. 3 ist die Verbindungsvorrichtung in einem Teillängsschnitt gezeigt. Die Fluidleitung 2 steckt in einer Bohrung 18 des Kupplungsblocks 16. Zwischen dem Kupplungsblock 16 und dem Bund 4 der Fluidleitung 2 ist eine Flachdichtung 19 angeordnet. Die Halterung 5 liegt mit ihren Armen 12 auf dem Bund 4 auf und presst diesen gegen die Flachdichtung 19 und den Kupplungsblock 16.

Die plastische Verformung der Arme 12 um die Fluidleitung 2 herum ist notwendig, da ansonsten der Bund 4 nur partiell gegen die Flachdichtung 19 gepresst würde und die Verbindung nicht dicht wäre. Das durch die plastische Verformung der Arme 12 an den Inneren der Fluidleitung 2 zugeordneten Bereiche der Arme 12 zusammengestauchte Material ist während der Umformung im Wesentlichen in die Nuten 13 geflossen. Nur ein vernachlässigbar geringer Teil des gestauchten Materials hat zu einer axialen Verdickung der Arme 12 geführt, was zu einer nur geringen Ungleichmäßigkeit 21 der Auflage der Arme 12 auf den Bund 4 führt. Diese geringfügige Ungleichmäßigkeit ist durch die Nuten 13 deutlich geringer als ohne Nuten 13 und beeinträchtigt die Dichtigkeit und Dauerfestigkeit der Verbindung nicht merklich.

### Bezugszeichenliste

### (Teil der Beschreibung)

- 1, 2: Fluidleitungen
- 3, 4: Bunde der Fuidleitungen 1, 2
- 5: Halterung
- 6, 7: Aufnahmen der Halterung 5
- 8, 9: Durchmesser der Fluidleitungen 1, 2
- 11: Bohrung der Halterung 5
- 12: Arme der Aufnahmen 6, 7
- 13: Nuten
- 15: Schraube
- 16: Kupplungsblock
- 18: Bohrung des Kupplungsblocks 16
- 19: Flachdichtung
- 21: Ungleichmäßige Verdickung der Arme 12

## Patentansprüche

1. Verbindungsanordnung, umfassend eine Halterung (5), für Fluidleitungen (1, 2) mit einer weiteren fluidfördernden Komponente (16), bei der die Fluidleitung (1, 2) mindestens einen radial nach außen weisenden Bund (3, 4) aufweist, der mittels einer Halterung (5) axial gegen die weiteren fluidförderende Komponente (16) verspannbar ist, wobei die Halterung (5) der Verbindungsanordnung mindestens eine U-förmige seitliche Aufnahme (6, 7) und mindestens eine seitlich zu der Aufnahme (6, 7) versetzte Verschraubungsbohrung (11) aufweist und die mindestens eine U-förmige Aufnahme (6, 7) durch zwei Schenkel (12) gebildet ist, die seitlich von der Verschraubungsbohrung (11) sich in einer vorbestimmten Länge von der Halterung (5) weg erstrecken, wobei die vorbestimmte Länge der Schenkel (12) so bemessen ist, dass sie bei plastischer Verformung die Fluidleitung (1, 2) mindestens mehr als zur Hälfte umschließen,
**dadurch gekennzeichnet, dass** die U-förmige Aufnahme (6, 7) mindestens einen Entlastungsbereich (13) aufweist, in dem Lücken, Nuten, Hohlräume oder andere Materialreduktioncn angeordnet sind.

## Claims

1. Connector arrangement, comprising a bracket (5), for connecting fluid lines (1, 2) to a further fluid-conducting component (16), in which connector arrangement the fluid line (1, 2) has at least one radially outwardly pointing collar (3, 4) which can be clamped axially against the further fluid-conducting component (16) by means of a bracket (5), with the bracket (5) of the connector arrangement having at least one U-shaped lateral receptacle (6, 7) and at least one screw bore (11) which is offset laterally with respect to the receptacle (6, 7) and the at least one U-shaped receptacle (6, 7) being formed by two limbs (12) which extend, laterally with respect to the screw bore (11), away from the bracket (5) with a predetermined length, with the predetermined length of the limbs (12) being dimensioned such that, under plastic deformation, said limbs (12) surround at least more than half of the fluid line (1, 2), **characterized in that** the U-shaped receptacle (6, 7) has at least one relief region (13) in which gaps, grooves, cavities or other material reductions are arranged.

## Revendications

1. Ensemble de raccordement, comportant un support (5), pour raccorder des conduits de fluide (1, 2) à un composant (16) supplémentaire d'acheminement de fluide, dans lequel le conduit de fluide (1, 2) comprend au moins un collet (3, 4) tourné radialement vers l'extérieur, lequel peut être serré axialement contre le composant (16) supplémentaire d'acheminement de fluide au moyen d'un support (5), le support (5) de l'ensemble de raccordement comprenant au moins un logement (6, 7) latéral en forme de U et au moins un alésage de vissage (11) décalé latéralement par rapport au logement (6, 7) et l'au moins un logement (6, 7) en forme de U étant formé par deux branches (12) qui s'étendent latéralement à partir de l'alésage de vissage (11) sur une longueur prédéfinie à partir du support (5), la longueur prédéfinie des branches (12) étant dimensionnée de telle sorte qu'elles entourent au moins plus de la moitié du conduit de fluide (1, 2) lorsqu'elles sont déformées plastiquement,
**caractérisé en ce que** le logement (6, 7) en forme de U comprend au moins une région de détente (13) dans laquelle sont situés des interstices, des rainures, des cavités ou d'autres réductions de matériau.
